# EUROPÄISCHE PATENTSCHRIFT

(11) **EP 1 470 520 B1**
(45) Veröffentlichungstag und Bekanntmachung des Hinweises auf die Patenterteilung: **14.09.2005**
(21) Anmeldenummer: 03702439.5
(22) Anmeldetag: 15.01.2003
(51) Int. Cl.: G06K 7/00

(54) **VERFAHREN ZUR ÜBERTRAGUNG VON DATEN ZWISCHEN EINER BASISSTATION UND EINEM TRANSPONDER**
METHOD FOR TRANSMITTING DATA BETWEEN A BASE STATION AND A TRANSPONDER
PROCEDE POUR TRANSMETTRE DES DONNEES ENTRE UNE STATION DE BASE ET UN TRANSPONDEUR

(30) Priorität: 01.02.2002 DE 10204317
(43) Veröffentlichungstag der Anmeldung: 27.10.2004
(73) Patentinhaber: ATMEL Germany GmbH, 74072 Heilbronn (DE)
(72) Erfinder: FRIEDRICH, Ulrich, 74248 Ellhofen (DE); FISCHER, Martin, 74629 Gleichen (DE)
(86) Internationale Anmeldenummer: PCT/EP2003/000325
(87) Internationale Veröffentlichungsnummer: WO 2003/065286

(56) Entgegenhaltungen:
- US-A- 6 044 333
- CHOW CK AND CULLUM CD: "Coded Clock Modulation. April 1969." IBM TECHNICAL DISCLOSURE BULLETIN, Bd. 11, Nr. 11, 1. April 1969 (1969-04-01), Seiten 1504-1505, XP002240527 New York, US

## Beschreibung

Die vorliegende Erfindung betrifft ein Verfahren zum Übertragung von Daten, gemäß dem Oberbegriff des Patentanspruchs 1.

Ein derartiges Verfahren ist aus der Druckschrift DE 10138217.0 bekannt Hierbei werden zwischen einer Basisstation und einem Transponder Informationspakete übertragen. Die Informationspakete bestehen aus einem Kopfabschnitt und einem Mittelabschnitt mit einem Datenbereich. Mit den im Kopfabschnitt den Wertigkeiten der Informationssymbole zugeordneten Kennungen werden im Mittelabschnitt die Daten des Datenbereiches kodiert. Nachteil des Verfahrens ist, daß bei Einsatz im Bereich UHF und höher durch Reflexionen und oder Absorptionen störende Interferenzen bei der Kommunikation die Zuverlässigkeit der Datenübertragung verringem. Zur Korrektur der Lesefehler muß das gesamte Datenpaket übertragen werden.

Ein weiteres Verfahren ist aus der Druckschrift EP 473 569 B1 bekannt Hierbei werden mittels einer amplitudenmodulierten Trägerwelle digitale Daten zwischen einer Basisstation und einem passiven Transponder ausgetauscht Die einzelnen Bits eines Datenwortes bestehen aus einer Zeitspanne, in der das elektromagnetische Feld eingeschaltet und einer Zeitspanne, in der das elektromagnetische Feld (Feldlücke) ausgeschaltet ist, wobei die Feldlücke als Separator zwischen zwei aufeinanderfolgenden Bits dient Die Wertigkeit der Bits bestimmt sich aus der Länge der Zeit, in der das elektromagnetische Feld eingeschaltet ist. Für die Gesamtzeit zur Darstellung der einzelnen Bits wird der feste zeitliche Beitrag der Feldlücke hinzugezählt. Ferner wird bei dem passiven System aus dem Tragerfeld mittels Absorptionsmodulation die Energie für den Transponder gewonnen.

Ein weiteres Verfahren ist aus der Druckschrift EP 0 777 191 A1 bekannt. Hierbei werden Daten mittels einer PWM modulierten Trägerwelle übertragen, wobei die Wertigkeit der Bits durch unterschiedliche Zeitlängen dargestellt werden und am Ende eines Zeitintervalls im sogenannten Vorwärtslink das Trägerfeld zur Separation der einzelnen Bits kurz eingeschaltet Wird. Ferner sind unterschiedliche Codierungsverfahren zur Übertragung von digitalen Daten aus Finkenzeller, RFID Handbuch insbesondere S, 106 ff und der Druckschrift US 3 560 947 bekannt.

Durch die steigenden sicherheitsanforderungen mossen in immer kürzeren Zeitspannen eine Vielzahl von informationspaketen auf eine Trägerwelle moduliert werden. Zur Modulation wird bevorzugt eine Amplitudenmodulation (ASK) verwendet. Um eine höhere Datenrate und eine höhere Reichweite zu erzielen, werden im Bereich der Transponder zunehmend Trägerfrequenzen im Bereich von UHF und Mikrowellen eingesetzt. Grundlage der bidirektionalen Datenübertragung zwischen Transponder und Basisstation bildet ein Datenprotokoll, das unter anderem die Anzahl der Informationssymbole wie beispielsweise die Wertigkeiten je Datenbit festlegt, sowie die Kennung der einzelnen Symbole definiert. Insbesondere im UHF Bereich treten bei der Datenübertragung durch Änderung der Übertragungsbedingungen infolge von Reflexionen und mit den damit verbundenen konstruktiven und destruktiven Interferenzen Lesefehler auf. Da dies eine nochmalige Übertragung des Datenwortes zur Folge hat, reduziert sich die effektive Datenrate erheblich.

Nachteil der bisherigen Verfahren ist, daß sich die effektive Datenrate durch die Übertragungsfehler insbesondere im Bereich sehr hoher Frequenzen durch die schwankenden Übertragungsbedingungen reduziert. Diese Reduzierung der Datenrate macht sich bei zeitkritischen Anwendungen störend bemerkbar. Aufgabe der vorliegenden Erfindung ist es, ein Verfahren zur Übertragung von Daten anzugeben, das die Zuverlässigkeit der Datenübertagung erhöht und einfach und kostengünstig durchführbar ist.

Diese Aufgabe wird erfindungsgemäß durch ein Verfahren der Eingangs genannten Art mit den Merkmalen des Patentanspruches 1 gelöst. Günstige Ausgestaltungsformen sind Gegenstand von Unteransprüchen. Eine Vorrichtung zur Umsetzung des Verfahrens wird durch die Ansprüche 7 und 8 gegeben.

Hiernach besteht das Wesen der Erfindung darin, daß bei einer Übertragung anhand eines zusätzlichen Prüfsignals die Zuverlässigkeit erhöht wird. Hierzu werden von einer Basisstation und einem Transponder auf eine elektromagnetischen Welle Informationspakete aufmoduliert. Das Informationspaket weist einen Datenabschnitt mit einem Datenwort, wobei das Datenwort als eine Folge von Bits ausgebildet ist, deren Wertigkeit jeweils ein Modulationszustand zugeordnet wird und in den mittels einem aus zwei aufeinanderfolgenden Taktimpulsen erzeugten Zeitintervall jeweils ein Bit der Bitfolge übertragen wird. Des Weitem wird während des Zeitintervalls ein Prüfsignal mit einer gegebenen Zeitdauer erzeugt und dem Prüfsignal ein zeitlich konstanter Modulationszustand zugeordnet. Hierbei haben Untersuchungen der Anmelderin gezeigt, daß es vorteilhaft ist, das Prüfsignal zu Beginn eines Zeitintervalls einzufügen.

Ein Vorteil des Verfahrens ist es, dass mittels des Einfügen des Prüfsignals unabhängig von dem Modulationsverfahren ein vorbestimmter Modulationszustand gegeben ist, der als Bezugspunkt für die Bestimmung der Wertigkeit des Bits verwenden läßt. Hierbei ist die Dauer des Prüfsignals gegeben und läßt sich im Kopfabschnitt des jeweiligen Informationspaketes dem Empfänger mitteilen. Ein weiterer Vorteil ist, daß die Dauer des Prüfsignals unabhängig von der Länge des Zeitintervalls ist.

In einer Weiterbildung des Verfahrens wird zur Dekodierung der empfangenen Bitfolge die Wertigkeit des in dem Zeitintervall übertragenen Bits aus dessen Modulationszustand in einem durch die Dauer des Prüfsignals bestimmten Zeitpunkts abgeleitet. Ferner ist es vorteilhaft während der Übertragung eines Datenabschnitts dem Prüfsignal einen vorbestimmten Modulationszustand zuzuordnen. Hierdurch entfällt die Detektion des Modulationszustandes während eines gesamten Zeitintervalls mittels Integrationsverfahren. Da die Wahrscheinlichkeit der Detektion eines Bitfehlers insbesondere im Bereich von UHF durch eine ungewollte Änderung des Modulationszustandes infolge von Reflexionen wesentlich verringert wird, wird die Zuverlässigkeit der Datenübertragung und die effektive Datenrate wesentlich erhöht. Ferner lassen sich aus dem an einem vorbestimmten Zeitpunkt vorgegebenen Modulationszustand bereits während der Übertragung des jeweiligen Zeitintervalls Bitfehler erkennen und sofort korrigieren. Die Korrektur wird nach Abschluß der Übertragung des Datenwortes mittels eines oder mehreren Prüfbits (CRC-Bereich) kontrolliert. Untersuchungen der Anmelderin haben gezeigt, daß hierdurch eine wesentliche Erhöhung der effektiven Datenrate erzielt wird.
Ferner haben andere Untersuchungen der Anmelderin gezeigt, daß sich die Steuerung des Modulationszustandes in Zusammenhang mit der Übertragung eines Prüfsignal im Kopfabschnitt auf ein einfache Weise mittels eines sogenannten "Peek-Detektors" durchführen und sich durch die Einsparung einer aufwendigen Zeitmessereinheit sich der Stromverbrauch verringern läßt. Hierdurch wird insbesondere in passiven Transpondern die Kommunikationsreichweite erhöht.

Die erfindungsgemäße Vorrichtung soll nachfolgend anhand der Ausführungsbeispiele im Zusammenhang mit mehreren schematisierten Zeichnungen erläutert werden. Es zeigen, die
- Fig. 1a: ein erstes Taktsignal für eine Datenübertragung, und
- Fig. 1b: ein zeitlich begrenztes Prüfsignal, und
- Fig. 1c: eine Bitfolge eines zusendeten Datenworts, und
- Fig. 1d: der zeitliche Verlauf des Modulationszustands, und
- Fig. 2a: ein zweites Taktsignal, und
- Fig. 2b: ein Prüfsignal, und
- Fig.2c: eine zu sendende Bitfolge eine Datenwortes, und
- Fig. 2d: ein Modulationssignal, und
- Fig. 3: ein erste Vorrichtung zur Steuerung des zeitlichen Verlaufs des Modulationszustand, und
- Fig. 4: eine zweite Vorrichtung zur Steuerung des zeitlichen Verlaufs des Modulationszustand.

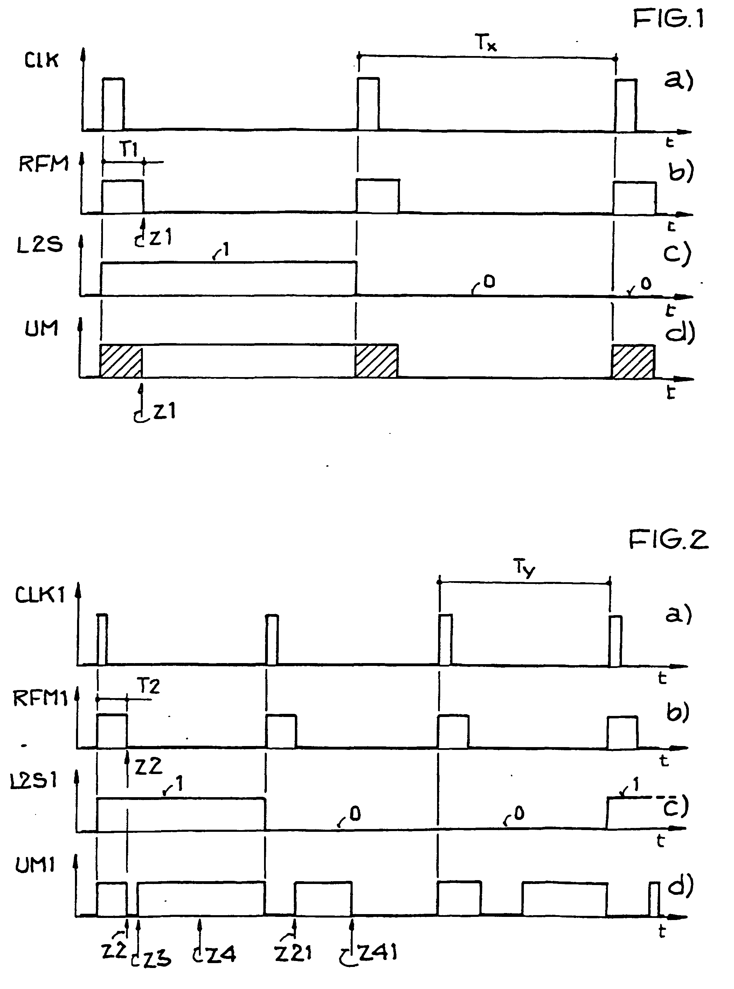

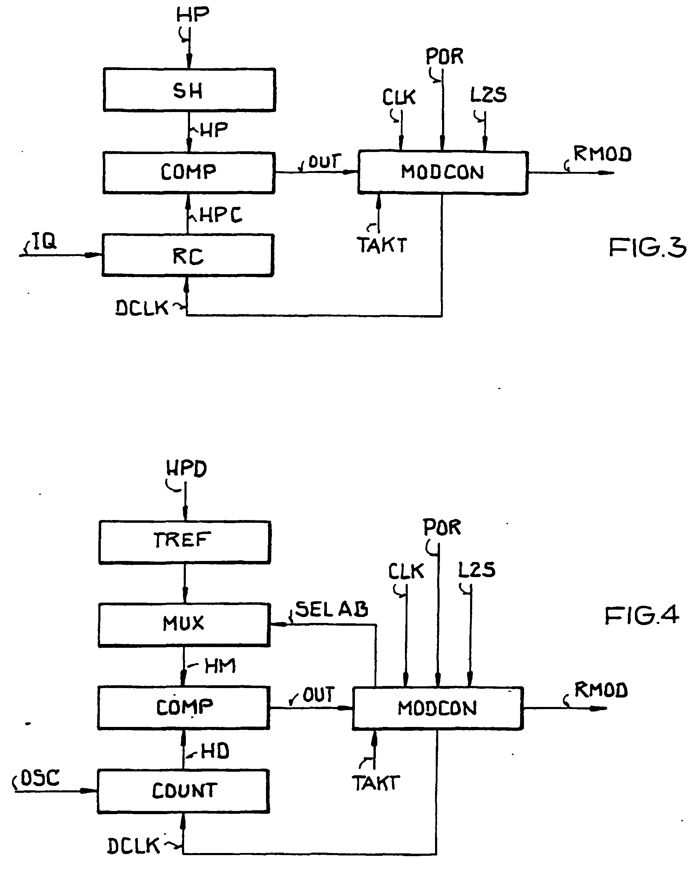

Anhand den in Figuren 1a - 1d bzw. 2a - d dargestellten zeitlichen Signalverläufe wird der Zusammenhang zwischen einem Prüfsignal RFM und einem Datensignal L2S bei einer synchronen Datenübertragung erläutert, wie es für die Erzeugung des zeitlichen Änderung der Modulation einer elektromagnetischen Welle benötigt wird. Hierbei wird beispielsweise von einer Basisstation eine modulierte elektromagnetische Welle ausgesendet, aus der in einem Transponder ein Taktsignal CLK extrahiert wird. In dem Transponder wird nachfolgend die elektromagnetische Welle der Basisstation moduliert. Hierzu wird insbesondere bei hohen Frequenzen beispielsweise im Bereich von UHF die reflektierte Welle durch eine Phasen- und oder Amplitudenmodualtion mittels einer Modulationssteuerungseinheit moduliert.. Hierbei wird in den Figuren 1a - 1d die Einführung des Prüfsignals in Zusammenhang mit einem statischen Modulationsverfahren in den Figuren 2a - 2d die Integration des Prüfsignals mit einen dynamischen Modulationsverfahren aufgezeigt, wobei der logischen Eins und der logischen Null keine festen Zuordnungen zu einem Modulatiuonszustand vorgegeben werden. Vielmehr definieren sich die beiden Wertigkeiten als Zeitpunkte relativ zu der Dauer des Zeitintervalls Ty oder aus einer Folge von Modulationsänderungen die zu bestimmten Zeitpunkten erfolgen.

Im Folgenden werden die Figuren 1a bis 1d erläutert. In der Figur 1a ist der Verlauf eines Taktsignal CLK dargestellt. Hierbei wird der zeitliche Verlauf der Spannung von den einzelnen Taktimpulsen dargestellt, wobei jeweils zwei aufeinanderfolgende Spannungsimpulse ein Zeitintervall Tx definieren. Ferner ist in der Figur 1b der Verlauf des Prüfsignals RFM dargestellt. Es beginnt jeweils mit jedem Taktsignal CLK und endet nach einer gegebenen Zeit T1. Während das Signal RFM anliegt weist es einen konstanten Wert auf. In der Figur 1c ist eine zu sendende Bitfolge L2S als Teil eines Datenwortes dargestellt. Hierbei liegt der Modulationszustand während des Zeitintervalls Tx für eine logische Eins ein high-Pegel für eine logische Null ein low Pegel an. In der Figur 1d ist der Verlauf des Modulationszustandes dargestellt. Hierbei wird während der Zeitdauer T1 durch das Prüfsignal zu Beginn eines jeden Zeitintervalls ein high Pegel vorgegeben. Nachfolgend ändert sich der Modulationszustand an dem Zeitpunkt z1 nur dann, wenn anschließend eine logische Null übertragen wird. Am Ende des Intervalls Tx ändert sich der Modulationszustand von low nach high sofern eine logische Null übertragen wurde.

Ein Vorteil des Verfahrens ist, daß durch das Prüfsignal die Wertigkeit des jeweils übertragenen Bits im Empfänger durch Detektion der Modulationsänderung und des Modulationszustandes an dem Zeitpunkt Z1 extrahiert wird. Liegt eine andere Änderung des Modulationszustandes als von high nach low an dem Zeitpunkt Z1 vor wird ein Bitfehler festgestellt und sofort korrigiert, d.h. aus dem detektierten logischen Zustand Eins wird zu einem logischer Zustand Null korrigiert.

Im Folgenden werden die Figuren 2a - 2d erläutert.
In der Figur 2a ist der zeitliche Verlauf eines Taktsignal CLK1 dargestellt. Hierbei wird aus jeweils zwei aufeinanderfolgende Taktsignale CLK1 ein Zeitintervall Ty definiert.
In der Figur 2b ist der zeitliche Verlauf eines Prüfsignals RFM1 dargestellt. Es beginnt jeweils neu mit jedem Taktsignal CLK1 und endet nach einer gegebenen Zeit T2. Der Wert des Prüfsignal RFM1 wechselt an dem Zeitpunkt Z1 von high auf low. In der Figur 2c ist eine zu sendende Bitfolge L2S1 als Teil eines Datenwortes dargestellt, wobei einer logischen Eins während der gesamten Zeitintervalls Ty ein high-Pegel und für eine logische Null ein low Pegel zugeordnet ist.
In der Figur 2d ist der aus den Figuren 2a - 2c resultierende Verlauf des Modulationszustandes dargestellt: Im vorliegenden Beispiel eines dynamischen Modulationsverfahren ist der logischen Eins der Zeitpunkt Z3 d.h. ein Viertel des Zeitintervalls Ty und der logischen Null der Zeitpunkt Z4 d.h. ein halb des Zeitintervalls Ty zugeordnet. Sofern vor dem ersten dargestellten Zeitintervall Modulationszustand low war wechselt er zu Beginn des ersten dargestellten Zeitintervalls bis zu dem Zeitpunkt Z2 auf den Modulationszustand high. Nachfolgend ändert sich der Modulationszustand bei dem Zeitpunkt Z3 da eine logische Eins übertragen wird. Am Ende des ersten Zeitintervalls ändert sich der Modulationszustand. Im zweiten Zeitintervall ändert sich an dem Zeitpunkt Z21 und an dem Zeitpunkt Z41 der Modulationszustand da eine logische Null übertragen wird. Hierbei wird deutlich, daß aus der Änderung des Modulationszustandes an definierten Zeitpunkten sich die Wertigkeit des zu übertragenden Bits ergibt. Durch die Einführung des Prüfsignals RFM wird eine zusätzliche Information bereitgestellt, die sich zur Überprüfung, ob eine ungewollte Modulationszustandsänderung vorliegt, verwenden läßt. Hierdurch läßt sich innerhalb des jeweiligen Zeitintervalls Ty ein Bitfehler mit hohe Zuverlässigkeit detektieren und gegebenenfalls korrigieren.

Die Figur 3 zeigt eine Vorrichtung zur Integration eines Prüfsignal zu jedem Bit einer Bitfolge eines Datenwortes. Hierzu wird der zeitlichen Länge des Prüfsignals ein Wert einer Ladespannung einer Kapazität mit einer bekannten Zeitkonstante zugeordnet. Hierbei ist im Sender, beispielsweise einer Basisstation, die Ladezeitkonstante der zuladenden Kapazität, beispielsweise angeordnet in einem Transponder, bekannt. Um dem Transponder die zeitliche Länge des in seinem Antwortsignal zu integrierenden Prüfsignals mitzuteilen, wird von der Basisstation, einen der zeitlichen Länge des Prüfsignals zugeordneten Spannungswert HP, im Kopfabschnitt eines Informationspaketes übertragen. Im Transponder wird der Spannungswert HP in einer Speichereinheit SH gespeichert. Von der Speichereinheit SH wird der Spannungswert HP einem Komparator COMP zur Verfügung gestellt.. Gleichzeitig liegt an dem Komparator COMP die Ladespannung HPC. Die Ladespannung HPC wird vorteilhafter Weise von einer Stromquelle IQ proportional zu der Zeit erhöht. Übersteigt der Spannungswert HPC den Spannungswert HP wird dies von dem Komparator mittels eines Ausgangs OUT durch Änderung eines am Ausgang OUT anliegenden Spannungspegel einer Steuereinheit MODCON mitgeteilt. An der Steuereinheit MODCON, die mittels eines Ausgangs RMOD den zeitlichen Verlauf der Modulationszustände des Antwortsignals bestimmt, sind außerdem ein Reseteingang POR, ein Dateneingang L2S, der die zu sendende Bitfolge des Datenwortes bereitstellt, ein Systemtakteingang TAKT und ein Datentakteingang CLK angeschlossen. Ferner wird der Entladezeitpunkt der Kapazität RC von der Steuereinheit MODCON mittels eines Ausgangs DCLK gesteuert. Durch den Ausgang DCLK wird hierbei die Kapazität RC in Abhängigkeit der aus der empfangenen Welle der Basisstation extrahierten Datentakt CLK abgeleiteten Zeitpunkten entladen. Hierdurch ändert sich der Pegel am Ausgang OUT des Komparators COMP.

Ein Vorteil der Vorrichtung ist es, daß sich die Länge des Prüfsignals auf einfache Weise durch die Höhe eines Wertes ändern läßt, und sich das Prüfsignal in einer stromsparenden Weise durch den geringen erforderlichen zusätzlichen Schaltungsaufwand in eine bestehende Steuereinheit integrieren läßt.

In der Figur 4 ist eine weitere Vorrichtung zur Integration eines Prüfsignals zu jedem Bit einer Bitfolge eines Datenwortes dargestellt. Bei der Erläuterung der Zeichnungsunterlage werden nur die Unterschiede zu der Ausführungsform der Figur 3 dargestellt. Die aus dem Kopfabschnitt des Informationspaketes extrahierte zeitliche Länge des Prüfsignals wird in der Speichereinheit TREF als Wert abgelegt. Der Wert wird einem Multiplexer MUX zugeführt. Ferner erhält der Multiplexer von der Steuereinheit MODCON ein Signal SELAB . Die Werte des Signal SELAB werden von der Steuereinheit entsprechend den Wertigkeiten der Bits erzeugt, indem jeder Wertigkeit ein Zeitpunkt zugeordnet wird, der sich aus einem Bruchteil der Länge des aus zwei aufeinanderfolgenden Datentakten CLK bestimmt. Der Multiplexer stellt die Werte HM geordnet nach ihre Größe dem Komparator COMP zur Verfügung. Gleichzeitig liegt an dem Komparator der Wert HB einer Zählereinheit COUNT an. Hierbei wird der Zähler mittels eines Oszillators OSC hochgezählt und mittels des Signals DCLK mit jedem Datentaktsignal CLK zurückgesetzt. Übersteigt der Wert HD den Wert HM ändert sich am Ausgang des Komparators COMP der Spannungspegel.

Ein Vorteil der Vorrichtungen ist es, daß sich durch sie auf einfache Weise unabhängig von dem jeweiligen Modulationsverfahren ein Prüfsignal in eine Datenübertragung integrieren läßt. Hierdurch wird die effektive Datenrate wesentlich erhöht. Des Weiteren lassen sich beide Steuervorrichtungen in einer sehr stromsparenden Weise ausführen.

## Patentansprüche

1. Verfahren zur Übertragung von Daten zwischen einer Basisstation (BS) und einem Transponder (TR) mittels einer elektromagnetischen Welle, bei dem auf dieser elektromagnetischen Welle ein Informationspaket (IP) aufmoduliert ist, welches einen Datenabschnitt (DA) mit einem Datenwort aufweist und das als eine Folge von Bits ausgebildet ist, deren Wertigkeit jeweils ein Modulationszustand zugeordnet wird, wobei in den mittels einem aus zwei aufeinanderfolgenden Taktimpulsen erzeugten Zeitintervall (TX) jeweils ein Bit der Bitfolge übertragen wird,
**dadurch gekennzeichnet, daß**
• während des Zeitintervalls (TX) zusätzlich zu den Taktimpulsen ein Prüfsignal (RFM) zur Prüfung der übertragenen Wertigkeit mit einer gegebenen Zeitdauer (T1) übertragen wird, und
• dem Prüfsignal (RFM) ein zeitlich konstanter Modulationszustand zugeordnet wird.

2. Verfahren nach Anspruch 1, **dadurch gekennzeichnet, dass** das Prüfsignal (RFM) zu Beginn eines Zeitintervalls (TX) eingefügt wird.

3. Verfahren nach Anspruch 1 oder Anspruch 2, **dadurch gekennzeichnet, dass** zur Dekodierung der empfangenen Bitfolge die Wertigkeit des in dem Zeitintervall (TX) übertragenen Bits aus dessen Modulationszustand in einem durch die Dauer des Prüfsignals (RFM) bestimmten Zeitpunkts abgeleitet wird.

4. Verfahren nach Anspruch 3, **dadurch gekennzeichnet, dass** während der Übertragung eines Datenabschnitts dem Prüfsignal (RFM) ein vorbestimmter Modulationszustand zugeordnet wird.

5. Verfahren nach einem der Ansprüche 1 bis 4, **dadurch gekennzeichnet, dass** die Wertigkeit des in dem Zeitintervall (TX) übertragenen Bits aus der Änderung des Modulationszustands in einem durch die Dauer des Prüfsignals (RFM) bestimmten Zeitpunkts abgeleitet wird.

6. Verwendung des Verfahrens nach einem der Ansprüche 1 bis 5 zur Erkennung und Korrektur von Bitfehlern während der Übertragung des Datenwortes.

7. Modulationsteuervorrichtung zur Umsetzung des Verfahrens nach einem der Ansprüche 1 bis 5, bestehend aus einer Sample/ Hold Einheit (SH) in der ein erster Spannungswert, der proportional zu der Zeitdauer des Prüfsignals (RFM) ist, abgelegt ist, einer Integrationseinheit (RC), die einen zweiten Spannungswert bereitstellt, der proportional der Dauer eines Ladestroms einer Konstantstromquelle (IQ) ist, einem Komparator (COMP) zum Vergleich des ersten Spannungswertes mit dem zweiten Spannungswert, einer Modulationskontrolleinheit (MOD_CON) zur Erzeugung des Modulationszustandes der elektromagnetischen Welle in Abhängigkeit eines Ausgangssignal (OUT) des Komparators (COMP) und der Bitfolge des Datenwortes (L2S) und zur Rückstellung der Integrationseinheit (RC).

8. Modulationsteuervorrichtung zur Umsetzung des Verfahrens nach einem der Ansprüche 1 bis 5, bestehend aus einer Speichereinheit (TPEF), in der durch die Dauer des Prüfsignals (RFM) bestimmter Zeitpunkt abgelegt ist, einem Multiplexer (MUX), der zwischen Zeitpunkten, die den Wertigkeiten der zu sendenden Bits zugeordnet sind und dem der Dauer des Zeitintervalls (TX) zugeordneten Zeitpunkt umschaltet und den Zeitpunkt ausgibt, einer Zählereinheit (COUNT), die einen Zeitpunkt proportionalen Wert bereitstellt, ein Komparator (COMP) zum Vergleich des Wertes des Multiplexers (MUX) und des Wertes des Zählers (COUNT), einer Modulationskontrolleinheit zur Erzeugung des Modulationszustandes der elektromagnetischen Welle in Abhängigkeit eines Ausgangssignal (OUT) des Komparator (COMP) und der Bitfolge des Datenwortes (L2S).

## Claims

1. Method of transmitting data between a base station (BS) and a transponder (TR) by means of an electromagnetic wave, in which an information packet (IP), which comprises a data section (DA) with a data word and which is formed from a sequence of bits, is modulated on this electromagnetic wave, a respective modulation state being assigned to the valency of the bits, wherein a respective bit of the bit sequence is transmitted in each time interval (TX) produced by means of two successive timing pulses, **characterised in that**
- during the time interval (TX) additionally to the timing pulses a check signal (RFM) for checking the transmitted valency is transmitted with a given time duration (T1) and
- a modulation state constant in terms of times is assigned to the check signal (RFM).

2. Method according to claim 1, **characterised in that** the check signal (RFM) is inserted at the beginning of the time interval (TX).

3. Method according to claim 1 or claim 2, **characterised in that** for decoding of the received bit sequence the valency of the bit, which is transmitted in the time interval (TX), is derived from the modulation state thereof at a time instant determined by the duration of the check signal (RFM).

4. Method according to claim 3, **characterised in that** a predetermined modulation state is assigned to the check signal (RFM) during the transmission of a data section.

5. Method according to one of claims 1 to 4, **characterised in that** the valency of the bit transmitted in the time interval (TX) is derived from the change in the modulation state at a time instant determined by the duration of the check signal (RFM).

6. Use of the method according to one of claims 1 to 5 for recognition and correction of bit errors during transmission of the data word.

7. Modulation control device for transforming a method according to one of claims 1 to 5, consisting of a sample/hold unit (SH) in which a first voltage value proportional to the time duration of the check signal (RFM) is filed, an integration unit (RC) which provides a second voltage value proportional to the duration of a charging current of a constant current source (IQ), a comparator (COMP) for comparison of a first voltage value with the second voltage value, and a modulation control unit (MOD_CON) for generating the modulation state of the electromagnetic wave in dependence on an output signal (OUT) of the comparator (COMP) and the bit sequence of the data word (L2S) and for resetting the integration unit (RC).

8. Modulation control device for transforming a method according to one of claims 1 to 5, consisting of a memory unit (TREF) in which the time instant determined by the duration of the check signal (RFM) is filed, a multiplexer (MUX) which between time instants assigned to the valencies of the bits to be transmitted and the time instant assigned to the duration of the time interval (TX) switches over and issues the time instant, a counter unit (COUNT) which provides a value proportional to time instant, a comparator (COMP) for comparison of the value of the multiplexer (MUX) and the value of the counter (COUNT), and a modulation control unit for generating the modulation state of the electromagnetic wave in dependence on an output signal (OUT) of the comparator (COMP) and the bit sequence of the data word (L2S).

## Revendications

1. Procédé de transmission de données entre une station de base (BS) et un transpondeur (TR) au moyen d'une onde électromagnétique, dans lequel on module cette onde électromagnétique par un paquet d'informations (IP), présentant un segment de données (DA) avec un mot de données numériques sous la forme d'une série de bits, à la valeur significative desquels est associé à chaque fois un état de modulation, un bit de la série de bits étant à chaque fois transmis dans l'intervalle de temps (TX) généré au moyen d'une parmi deux impulsions d'horloge consécutives,
**caractérisé en ce que** :
. durant l'intervalle de temps (TX), on transmet en plus des impulsions d'horloge un signal de vérification (RFM) pour vérifier la valeur significative transmise par rapport à une durée temporelle (T1) donnée, et
. l'on associe au signal de vérification (RFM) un état de modulation constant dans le temps.

2. Procédé selon la revendication 1, **caractérisé en ce que** le signal de vérification (RFM) est introduit au début d'un intervalle de temps (TX).

3. Procédé selon les revendications 1 ou 2, **caractérisé en ce que**, pour décoder la série de bits reçue, on détermine la valeur significative du bit transmis durant l'intervalle (TX) à partir de son état de modulation à un instant donné par la durée du signal de vérification (RFM).

4. Procédé selon la revendication 3, **caractérisé en ce que** durant la transmission d'un segment de données, on associe au signal de vérification (RFM) un état de modulation prédéterminé.

5. Procédé selon l'une quelconque des revendications 1 à 4, **caractérisé en ce que** l'on détermine la valeur significative du bit transmis durant l'intervalle de temps (TX) à partir de la modification de l'état de modulation à un instant donné par la durée du signal de vérification (RFM).

6. Utilisation du procédé selon l'une quelconque des revendications 1 à 5 pour la détection et la correction d'erreurs de bits durant la transmission du mot de données numériques.

7. Dispositif de commande de modulation pour la conversion en numérique du procédé selon l'une quelconque des revendications 1 à 5, consistant en une unité d'échantillonneur-bloqueur (SH) dans laquelle on met en mémoire une première valeur de tension proportionnelle à la durée du signal de vérification (RFM), en une unité d'intégration (RC) fournissant une deuxième valeur de tension, proportionnelle à la durée d'un courant de charge d'une source de courant constante (IQ), en un comparateur (COMP) pour comparer la première valeur de tension à la deuxième, en une unité de contrôle de modulation (MOD_CON) pour générer l'état de modulation de l'onde électromagnétique en fonction d'un signal de sortie (OUT) du comparateur (COMP) et de la série de bits du mot de données numériques (L2S) et pour la remise à l'état initial de l'unité d'intégration (RC).

8. Dispositif de commande de modulation pour la conversion en numérique du procédé selon l'une quelconque des revendications 1 à 5, consistant en une unité mémoire (TREF) dans laquelle on met en mémoire un point-temps déterminé par la durée du signal de vérification (EFM), en un multiplexeur (MUX) qui commute à des instants associés aux valeurs significatives des bits à envoyer et à l'instant associé à la durée de l'intervalle de temps (TX) et qui délivre le point-temps, en une unité de comptage (COUNT) fournissant une valeur proportionnelle à l'instant, en un comparateur (COMP) pour comparer la valeur du multiplexeur (MUX) et celle du compteur (COUNT), en une unité de contrôle de modulation pour générer l'état de modulation de l'onde électromagnétique en fonction d'un signal de sortie (OUT) du comparateur (COMP) et de la série de bits du mot de données numériques (L2S).
